# EUROPEAN PATENT APPLICATION

(11) **EP 4 614 618 A1**
(43) Date of publication of application: **10.09.2025**
(21) Application number: 22964008.1
(22) Date of filing: 04.11.2022
(51) Int. Cl.: H01M 4/58, C01B 33/32

(54) **POLYANIONIC COMPOUND AND PREPARATION METHOD THEREFOR, POSITIVE ELECTRODE MATERIAL, POSITIVE ELECTRODE SHEET, SECONDARY BATTERY, AND ELECTRONIC DEVICE**

(71) Applicant: Ningde Amperex Technology Limited, Ningde, Fujian 352100 (CN)
(72) Inventor: ZHOU, Molin, Ningde, Fujian 352100 (CN); LU, Yuhao, Ningde, Fujian 352100 (CN); XU, Leimin, Ningde, Fujian 352100 (CN)
(74) Representative: Icosa
(86) International application number: PCT/CN2022/129797
(87) International publication number: WO 2024/092698

(57) **Abstract**

A polyanionic compound has the following chemical formula: Na₂₊ₓMn_{1-y}M_{y}Si_{2-z}M'_{z}O₆₋ₜN₁XₚY_{q} (1), where in formula (1), M is selected from Ni, Fe, Cu, Zn, Mg, Al, or a combination thereof, M' is selected from Ge, Sn, Ti, or a combination thereof, X is selected from S, Se, or a combination thereof, and Y is selected from F, Cl, or a combination thereof, where -0.2<x<0.2, 0≤y<0.1, 0≤z<0.1, 0≤t≤0.5, 0≤k≤2t/3, 0≤p≤t, 0≤q≤t/2, and k+1/2p+3/2q=t.

## Description

### TECHNICAL FIELD

This application relates to the field of sodium battery technologies, and in particular to a polyanionic compound and a preparation method therefor, a positive electrode material, a positive electrode sheet, a secondary battery, and an electronic device.

### BACKGROUND

Sodium-ion batteries developed based on sodium are expected to replace part of the lithium-ion battery market due to their low manufacturing costs and good safety, becoming a strong competitor for the next generation of batteries. Positive electrode materials of sodium-ion batteries are the main factor affecting the performance of sodium-ion batteries.

In related arts, positive electrode materials of sodium-ion batteries have limited choices, such as oxides, fluorides, sulfides, phosphates, and pyrophosphates. This leads to varying degrees of performance limitations for secondary batteries, such as poorer stability and lower specific capacity of sodium-ion secondary batteries. Therefore, positive electrode materials for sodium-ion batteries still need to be studied and improved.

### SUMMARY

This application is conducted in view of the above issues, aiming to provide a polyanionic compound and a preparation method therefor, a positive electrode material for sodium-ion battery, a positive electrode sheet, a secondary battery, and an electronic device, so as to provide a polymer with excellent overall performance that can be used as a positive electrode material for sodium-ion battery.

To achieve the above objectives, a first aspect of this application provides a polyanionic compound having the following chemical formula:

Na₂₊ₓMn_{1-y}M_{y}Si_{2-z}M'_{z}O₆₋ₜNₖXₚY_{q} (1),

where in formula (1),
M is selected from Ni, Fe, Cu, Zn, Mg, Al, or a combination thereof, M' is selected from Ge, Sn, Ti, or a combination thereof, X is selected from S, Se, or a combination thereof, and Y is selected from F, Cl, or a combination thereof;
where -0.2<x<0.2, 0≤y<0.1, 0≤z<0.1, 0≤t≤0.5, 0≤k≤2t/3, 0≤p≤t, 0≤q≤t/2, and k+1/2p+3/2q=t.

Therefore, in this application, the polyanionic compound has a novel composition and structure, the structure being highly stable, and has a high sodium content. When the polyanionic compound is used in secondary batteries, the secondary batteries have improved specific capacity and excellent cycling stability.

According to an embodiment of one aspect of this application, -0.1≤x≤0, 0≤y≤0.08, and 0≤z≤0.05.

According to an embodiment of one aspect of this application, the polyanionic compound has the following chemical formula: Na₂MnSi₂O₆.

According to an embodiment of one aspect of this application, an X-ray powder diffraction pattern of the polyanionic compound has characteristic peaks at 2θ values of 34°±0.5°, 49°±0.5°, and 24°±0.5°.

According to an embodiment of one aspect of this application, an X-ray powder diffraction pattern of the polyanionic compound has a strongest characteristic diffraction peak attributed to a (222) crystal plane at a 2θ value of 34°±0.5°.

According to an embodiment of one aspect of this application, the polyanionic compound has an orthorhombic crystal structure belonging to a Pnnm space group. The polyanionic compound with this crystal structure has better structural stability and smaller structural changes during intercalation and deintercalation of sodium ions, thereby constructing a main body for reversible intercalation and deintercalation of sodium ions. Therefore, this improves capacity extraction and cycling performance of the polyanionic compound.

According to an embodiment of one aspect of this application, the polyanionic compound has a unit cell parameter a meeting 7.5±1.5Å, a unit cell parameter b meeting 10.5±1.5Å, and a unit cell parameter c meeting 10.5±1.5Å. The polyanionic compound with the unit cell parameters has better structural stability, and can further improve capacity extraction and cycling performance of the polyanionic compound.

According to an embodiment of one aspect of this application, where a unit cell of a crystal structure of the polyanionic compound includes:
12 Na atoms, 6 Mn atoms, 12 Si silicon atoms, and 36 oxygen atoms.

According to an embodiment of one aspect of this application, in the unit cell of the crystal structure of the polyanionic compound, the Mn atoms are at least partially substituted by an atom represented by M, the Si silicon atoms are at least partially substituted by an atom represented by M', and the oxygen atoms are at least partially substituted by an atom represented by X.

According to an embodiment of one aspect of this application, each Si atom forms a silicon-oxygen tetrahedron with four oxygen atoms at vertices, and every two silicon-oxygen tetrahedrons are corner-linked by sharing one oxygen atom;
each Mn atom forms a manganese-oxygen octahedron with six oxygen atoms at vertices, and every two manganese-oxygen octahedrons are coplanar connected by sharing three oxygen atoms; and
the silicon-oxygen tetrahedron and the manganese-oxygen octahedron are corner-linked by sharing an oxygen atom.

According to an embodiment of one aspect of this application, the Mn atoms are at least partially substituted by an atom represented by M, the Si silicon atoms are at least partially substituted by an atom represented by M', and the oxygen atoms are at least partially substituted by an atom represented by X.

Thus, in this application, the above unit cell structure further enhances the structural stability of the polyanionic compound, reduces structural changes during the intercalation and deintercalation of sodium ions, and further improves capacity extraction and cycling performance of the polyanionic compound.

According to an embodiment of one aspect of this application, the silicon-oxygen tetrahedrons and the manganese-oxygen octahedrons are corner-bridged into an anionic network by sharing an oxygen atom or X atom; and
Na⁺ is arranged along an axis a of the crystal structure of the polyanionic compound and fills pores of the crystal structure.

According to an embodiment of one aspect of this application, based on a total weight of the polyanionic compound, a mass percentage of element sodium contained in the polyanionic compound is 15% to 20%.

According to an embodiment of one aspect of this application, in a crystal structure of the polyanionic compound, a disorder rate of any two types of atoms among Na atom, Mn atom, Si atom, and O atom is <3%, and optionally <2%.

A second aspect of this application further provides a preparation method of the polyanionic compound according to the first aspect, which includes:
providing a dispersion containing a sodium source, a manganese source, a silicon source, an M source, an M' source, and an X source at a predetermined molar ratio;
reacting and crystallizing the sodium source, the manganese source, the silicon source, the M source, the M' source, and the X source in the dispersion under a predetermined temperature condition to obtain a suspension containing crystalline particles; and
washing the suspension with a solvent, followed by drying, to obtain the polyanionic compound.

According to an embodiment of one aspect of this application, the sodium source is a sodium salt, and optionally, sodium hydroxide.

According to an embodiment of one aspect of this application, the manganese source is selected from manganese-containing oxides, manganese-containing salts, or a combination thereof.

According to an embodiment of one aspect of this application, the silicon source is silicon dioxide or a silicon-containing salt.

According to an embodiment of one aspect of this application, the M source is selected from oxides or salts containing element M, where the element M is selected from Ni, Fe, Cu, Zn, Mg, Al, or a combination thereof.

According to an embodiment of one aspect of this application, the M' source is selected from oxides or salts containing element M', where the element M' is selected from Ge, Sn, Ti, or a combination thereof.

According to an embodiment of one aspect of this application, the X source is a salt containing element X, where X is selected from F, Cl, S, Se, N, or a combination thereof.

According to an embodiment of one aspect of this application, the solvent is selected from methanol, ethanol, propanol, propylene glycol, butanol, water, or a combination thereof.

According to an embodiment of one aspect of this application, the reacting and crystallizing the sodium source, the manganese source, the silicon source, the M source, the M' source, and the X source in the dispersion under a predetermined temperature condition to obtain a suspension containing crystalline particles includes:
reacting and crystallizing the sodium source, the manganese source, the silicon source, the M source, the M' source, and the X source in the dispersion at a predetermined temperature of 160°C to 240°C in a closed environment to obtain the suspension containing the crystalline particles.

A third aspect of this application provides a positive electrode material including the polyanionic compound according to the first aspect of this application or the polyanionic compound prepared by using the method according to the second aspect of this application.

A fourth aspect of this application provides a positive electrode sheet including:
a positive electrode current collector; and
a positive electrode material layer disposed on at least one side of a positive electrode current collector, where the positive electrode material layer includes the positive electrode material according to the third aspect of this application. Thus, the positive electrode sheet of this application has high comprehensive electrochemical performance.

According to an embodiment of one aspect of this application, based on a total weight of the positive electrode material layer, a mass percentage of the positive electrode material contained in the positive electrode material layer is 80% to 98%. Thus, the positive electrode sheet of this application further improves energy density.

A fifth aspect of this application provides a secondary battery including the positive electrode sheet in the fourth aspect of this application.

A sixth aspect of this application provides an electronic device including the secondary battery according to the fifth aspect of this application.

### BRIEF DESCRIPTION OF DRAWINGS

FIG. 1 is a crystal structure diagram of a polyanionic compound provided in Example 1 of this application along a (100) orientation;
FIG. 2 is a schematic coordination diagram of Mn(M) in the polyanionic compound structure provided in Example 1 of this application;
FIG. 3 is a schematic coordination diagram of Si(M') in the polyanionic compound structure provided in Example 1 of this application;
FIG. 4 is a schematic coordination diagram of Na⁺ in the polyanionic compound structure provided in Example 1 of this application;
FIG. 5 is an XRD diffraction spectrum provided in Example 1 of this application;
FIG. 6 is a schematic diagram of a secondary battery according to an embodiment of this application.
FIG. 7 is an exploded view of the secondary battery according to the embodiment of this application shown in FIG. 6;
FIG. 8 is a schematic diagram of a battery module according to an embodiment of this application;
FIG. 9 is a schematic diagram of a battery pack according to an embodiment of this application;
FIG. 10 is an exploded view of the battery pack according to the embodiment of this application shown in FIG. 9; and
FIG. 11 is a schematic diagram of an electronic device using a secondary battery as a power source according to an embodiment of this application.

### Description of reference signs:

1. battery pack; 2. upper box body; 3. lower box body; 4. battery module; 5. secondary battery; 51. housing; 52. electrode assembly; and 53. top cover assembly.

### DESCRIPTION OF EMBODIMENTS

Hereinafter, with appropriate reference to the detailed descriptions of the accompanying drawings, a polyanionic compound and a preparation method therefor, embodiments of a positive electrode material for sodium-ion battery, a positive electrode sheet, a secondary battery, and an electronic device of this application are specifically disclosed. However, there may be cases where unnecessary detailed descriptions are omitted. For example, detailed descriptions of well-known matters and repeated descriptions of actually identical structures have been omitted. This is to avoid unnecessarily prolonging the following description, for ease of understanding by persons skilled in the art. In addition, the accompanying drawings and the following descriptions are provided for persons skilled in the art to fully understand this application and are not intended to limit the subject matter recorded in the claims.

"Ranges" disclosed in this application are defined in the form of lower and upper limits. A given range is defined by one lower limit and one upper limit selected, where the selected lower and upper limits define boundaries of that particular range. Ranges defined in this method may or may not include end values, and any combinations may be used, meaning any lower limit may be combined with any upper limit to form a range. For example, if ranges of 60-120 and 80-110 are provided for a specific parameter, it is understood that ranges of 60-110 and 80-120 can also be envisioned. In addition, if minimum values of a range are given as 1 and 2, and maximum values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein, and "0-5" is just a short representation of a combination of these values. In addition, a parameter expressed as an integer greater than or equal to 2 is equivalent to disclosure that the parameter is, for example, an integer among 2, 3, 4, 5, 6, 7, 8, 9, 10, 11, 12, and so on.

Unless otherwise specified, all embodiments and optional embodiments of this application can be combined with each other to form new technical solutions.

Unless otherwise specified, all the technical features and optional technical features of this application can be combined with each other to form new technical solutions

Unless otherwise specified, all the steps in this application can be performed in the order described or in random order, and optionally, in the order described. For example, a method including steps (a) and (b) indicates that the method may include steps (a) and (b) performed in order or may include steps (b) and (a) performed in order. For example, the foregoing method may further include step (c), which indicates that step (c) may be added to the method in any ordinal position, for example, the method may include steps (a), (b), and (c), steps (a), (c), and (b), steps (c), (a), and (b), or the like.

Unless otherwise specified, "include" and "contain" mentioned in this application are inclusive or may be exclusive. For example, the terms "include" and "contain" can mean that other unlisted components may also be included or contained, or only listed components are included or contained.

Unless otherwise specified, in this application, the term "or" is inclusive. For example, the phrase "A or B" means "A, B, or both A and B". More specifically, any one of the following conditions meets the condition "A or B": A is true (or present) and B is false (or not present); A is false (or not present) and B is true (or present); or both A and B are true (or present).

Due to the increasing prominence of issues such as the scarcity, uneven distribution, and high cost of lithium resources, sodium-ion batteries may be the preferred direction for new batteries.

Sodium and lithium are located in the same main group and in adjacent periods, and have similar chemical properties. Preliminary studies have shown that the working principle of sodium-ion batteries is similar to that of lithium-ion batteries at room temperature. Additionally, sodium resources are widely distributed, with an abundance nearly 1000 times that of lithium, and therefore the cost is lower. In addition, sodium ions do not form Na-Al alloy with Al at low potential, so negative electrode current collectors of sodium-ion secondary batteries can use the more cost-effective Al foil. The Al foil will not undergo oxidative dissolution when over-discharged to 0 V, and is safe.

However, current sodium-ion batteries still have some performance gaps lithium-ion batteries. In a sodium-ion battery system, a positive electrode material is the key factor affecting the working voltage, energy density, and other electrochemical performance of a sodium-ion battery. There are three types of common positive electrode materials in sodium-ion batteries: layered polyanionic type, vanadium-based polyanionic type, and Prussian blue type.

Layered positive electrode materials further include two types, P2 and O3. P2-type positive electrode materials have a low sodium content and a low specific capacity, while O3-type positive electrode materials have a high sodium content but are highly hygroscopic in air and have poor processing performance. Vanadium-based polyanionic positive electrode materials have a stable structure and good cycling performance, but vanadium is a toxic metal, and its use is somewhat limited. Prussian blue positive electrode materials are inexpensive, but it is difficult to completely remove crystalline water in their structure, and their compacted density is very low, resulting in a low volumetric energy density. Polyanionic positive electrode materials have a relatively large molecular mass, leading to a smaller specific capacity, which is a significant obstacle to their development.

To promote the practical application of sodium-ion batteries in large-scale energy storage, the inventors have developed through research a new type of polyanionic positive electrode material and optimized and modified it.

Through research, the inventors have found that performing element doping and other modifications to the polyanionic positive electrode material offers a new polyanionic compound, which has a high specific capacity and excellent cycling stability and can be used as a positive electrode material for sodium-ion battery.

### Polyanionic compound

In an embodiment of this application, this application proposes a polyanionic compound having the following chemical formula:

Na₂₊ₓMn_{1-y}M_{y}Si_{2-z}M'_{z}O₆₋ₜNₖXₚY_{q} (1);

where in formula (1),
M is selected from Ni, Fe, Cu, Zn, Mg, Al, or a combination thereof, M' is selected from Ge, Sn, Ti, or a combination thereof, X is selected from S, Se, or a combination thereof, and Y is selected from F, Cl, or a combination thereof;
where -0.2<x<0.2, 0≤y<0.1, 0≤z<0.1, 0≤t≤0.5, 0≤k≤2t/3, 0≤p≤t, 0≤q≤t/2, and k+1/2p+3/2q=t.

The inventors have surprisingly found that the polyanionic compound has a novel composition and structure, the structure being highly stable, and has a high sodium content. When the polyanionic compound is used in secondary batteries, the secondary batteries have improved specific capacity and excellent cycling stability.

According to an embodiment of this application, the polyanionic compound has a high sodium ion content. For example, in a molecular compound represented by the chemical formula of the polyanionic compound, the number of sodium atoms can be 1.8 to 2.2, or even more than 2. This is conducive to improving the specific capacity of the polyanionic compound, thereby increasing the capacity density of the sodium-ion battery.

In the polyanionic compound according to this embodiment of this application, -0.1≤x≤0. According to this embodiment of this application, in a molecular compound represented by the chemical formula of the polyanionic compound, the number of sodium atoms is less than or equal to 2. This is conducive to improving the physicochemical stability (for example, to air, water, carbon dioxide, and electrolyte) of the polyanionic compound, reducing capacity loss caused by structural damage during storage and charge-discharge cycles of the polyanionic compound, thereby achieving a high capacity retention rate.

Not intended to be limited by any theoretical explanation, according to this embodiment of this application, Mn atoms, Si atoms, and O atoms form a stable crystal structure. In addition, during charge-discharge cycles, the Mn atoms can participate in redox reactions, providing effective charge compensation for intercalation and deintercalation of sodium ions while maintaining the stability of the crystal structure, so that the polyanionic compound has good electrochemical performance, such as high capacity retention rate and improved charge-discharge voltage platform.

In some embodiments of the polyanionic compound shown in formula (1), 0≤y<0.1, optionally 0≤y≤0.08, and further optionally 0<y≤0.07. In these embodiments, the polyanionic compound can be doped with M atoms selected from Ni, Fe, Cu, Zn, Mg, Al, or a combination thereof, to replace part of the Mn atoms in the crystal structure of the compound.

In some embodiments of the polyanionic compound shown in formula (1), 0≤z<0.1, optionally 0≤z≤0.05, and further optionally 0<z≤0.04. In these embodiments, the polyanionic compound can be doped with M' atoms selected from Ge, Sn, Ti, or a combination thereof, to replace part of the Si atoms in the crystal structure of the compound.

In some embodiments of the polyanionic compound shown in formula (1), 0≤t≤0.5, 0≤k≤2t/3, 0≤p≤t, 0≤q≤t/2, and k+1/2p+3/2q=t. In these embodiments, the polyanionic compound can be doped with element atoms selected from F, Cl, S, Se, N, or a combination thereof, to replace part of the O atoms in the crystal structure of the compound.

In the above embodiments, doping the polyanionic compound with the atoms of a predetermined element can regulate the Na ion capacity and charge-discharge voltage platform, improving the capacity extraction of the polyanionic compound, thereby enhancing the electrochemical performance of the polyanionic compound. Additionally, doping the polyanionic compound with the atoms of a predetermined element can maintain or improve the crystal structure stability of the polyanionic compound during Na ion intercalation/deintercalation, thereby providing the polyanionic compound with improved cycling performance. Moreover, doping with the atoms of a predetermined element can increase the migration rate of sodium ions in the polyanionic compound, resulting in improved ionic conductivity of the polyanionic compound, thereby reducing polarization and enhancing the electrochemical and kinetic performance of the polyanionic compound.

In some embodiments, the polyanionic compound has the following chemical formula: Na₂MnSi₂O₆.

In some embodiments, the polyanionic compound has any one of the following chemical formulas: Na₂Mn_{0.95}Ni_{0.05}Si₂O₆, Na₂Mn_{0.92}Ni_{0.02}Fe_{0.02}Cu_{0.02}Mg_{0.02}Si₂O₆, Na_{1.99}Mn_{0.97}Zn_{0.02}Al_{0.01}Si₂O₆, Na₂MnSi_{1.95}Ti_{0.05}O₆, Na₂MnSi_{1.95}Ge_{0.02}Sn_{0.03}O₆, Na₂MnSi₂O_{5.9}F_{0.1}Cl_{0.1}, and Na₂MnSi₂O_{5.5}S_{0.1}Se_{0.1}N_{0.2}.

According to some embodiments of this application, the polyanionic compound with the above chemical composition contains a predetermined doping element, so that good electrochemical performance (such as high capacity and stable charge-discharge voltage platform) and structural stability can be obtained, thereby providing improved capacity extraction and cycling performance.

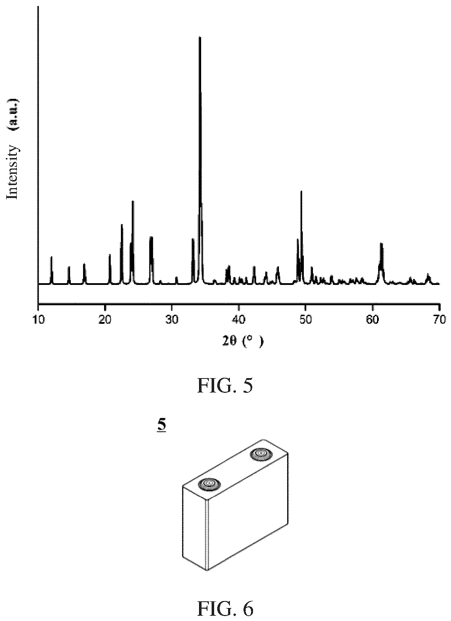

In some embodiments, an X-ray powder diffraction pattern of the polyanionic compound has characteristic peaks at 2θ values of 34°±0.5°, 49°±0.5°, and 24°±0.5°. In a specific example embodiment, the X-ray powder diffraction pattern of the polyanionic compound has a characteristic peak at the following 2θ value, as shown in FIG. 5.

The X-ray powder diffraction pattern of the polyanionic compound can be obtained by using testing methods known in the art. For example, the X-ray diffraction pattern can be measured using an X-ray diffractometer (XPertPro MPD) from Panalytical of Netherlands, under the following test conditions: Cu Kα radiation: (λ=1.5418Å), working current: 250 mA, continuous scanning, working voltage: 40 kV, scanning range 2θ: 10° to 70°, step size: 0.1°, and scanning speed: 0.2 seconds/step.

In some embodiments, an X-ray powder diffraction pattern of the polyanionic compound has a strongest characteristic diffraction peak attributed to a (222) crystal plane at a 2θ value of 34°±0.5°. Thus, the (222) crystal plane of the polyanionic compound is a closest packed plane. Not intended to be limited by any theoretical explanation, the polyanionic compound of this application allows sodium ions to intercalate and deintercalate between layered structures formed by the closest packed plane. This helps with capacity extraction and cycling performance when it serves as a positive electrode active material.

As understood by those skilled in the art, based on the X-ray powder diffraction test of the polyanionic compound, the crystal structure of the polyanionic compound, such as symmetry and unit cell parameters, can be further determined. In some embodiments, the polyanionic compound has an orthorhombic crystal structure belonging to a Pnnm space group. The polyanionic compound with this crystal structure has better structural stability and smaller structural changes during intercalation and deintercalation of sodium ions, thereby constructing a main body for reversible intercalation and deintercalation of sodium ions. Therefore, this improves capacity extraction and cycling performance of the polyanionic compound.

In some embodiments, the polyanionic compound has a unit cell parameter a meeting 7.5±1.5Å, a unit cell parameter b meeting 10.5±1.5Å, and a unit cell parameter c meeting 10.5±1.5Å.

As understood by those skilled in the art, the crystal structure of the polyanionic compound can be analyzed by using the refinement method (Rietveld) of powder XRD.

In some embodiments, a unit cell of a crystal structure of the polyanionic compound includes:
12 Na atoms, 6 Mn atoms, 12 Si silicon atoms, and 36 oxygen atoms.

In some embodiments, in the unit cell of the crystal structure of the polyanionic compound, the Mn atoms are at least partially substituted by an atom represented by M, the Si silicon atoms are at least partially substituted by an atom represented by M', and the oxygen atoms are at least partially substituted by an atom represented by X.

In some embodiments, each Si atom forms a silicon-oxygen tetrahedron with four oxygen atoms at vertices, and every two silicon-oxygen tetrahedrons are corner-linked by sharing one oxygen atom;
each Mn atom forms a manganese-oxygen octahedron with six oxygen atoms at vertices, and every two manganese-oxygen octahedrons are coplanar connected by sharing three oxygen atoms; and
the silicon-oxygen tetrahedron and the manganese-oxygen octahedron are corner-linked by sharing an oxygen atom.

In some embodiments, the Mn atoms are at least partially substituted by an atom represented by M, the Si silicon atoms are at least partially substituted by an atom represented by M', and the oxygen atoms are at least partially substituted by an atom represented by X.

Thus, in this application, the above unit cell structure helps to further understand the good structural stability of the polyanionic compound. This helps to reduce structural changes during the intercalation and deintercalation of sodium ions when the compound is used, and further improves capacity extraction and cycling performance of the polyanionic compound. Substituting the Mn atoms with M improves the efficiency of electron conduction and improves the rate capability. Substituting the oxygen atoms with X improves the stability of the crystal structure and improves the cycling stability.

In some embodiments, in the unit cell of the crystal of the polyanionic compound,
the silicon-oxygen tetrahedrons and the manganese-oxygen octahedrons are corner-bridged into an anionic network by sharing an oxygen atom or X atom; and
Na⁺ is arranged along an axis a of the crystal structure of the polyanionic compound and fills pores of the crystal structure.

Thus, Na⁺ in this application can be intercalated into and deintercalated from the above structural unit, achieving capacity extraction and optimizing cycling performance.

In some embodiments, based on a total weight of the polyanionic compound, a mass percentage of element sodium contained in the polyanionic compound is 15% to 20%. The element sodium with the above mass percentage can increase the energy density and capacity of the polyanionic compound.

In some embodiments, in a crystal structure of the polyanionic compound, a disorder rate of any two types of atoms among Na atom, Mn atom, Si atom, and O atom is <3%, and optionally <2%. With the above disorder rate, the polyanionic compound can have a more stable structure, and therefore its capacity stability is improved.

For example, one unit cell can contain 6 molecules. In an asymmetric structural unit, there are three crystallographically independent Nas (denoted as Na1, Na2, and Na3), two independent Mn(M)s (denoted as Mn(M)1 and Mn(M)2), two independent Si(M')s (denoted as Si(M')1 and Si(M')2), and six independent O(X)s (denoted as O(X)1, O(X)2, O(X)3, O(X)4, O(X)5, and O(X)6). All atoms have an occupancy rate of 100% in their sites, with no significant disorder and randomness.

### Preparation method of polyanionic compound

A second aspect of this application further provides a preparation method of the polyanionic compound according to the first aspect, which includes:
providing a dispersion containing a sodium source, a manganese source, a silicon source, an M source, an M' source, and an X source at a predetermined molar ratio;
reacting and crystallizing the sodium source, the manganese source, the silicon source, the M source, the M' source, and the X source in the dispersion under a predetermined temperature condition to obtain a suspension containing crystalline particles; and
washing the suspension with a solvent, followed by drying, to obtain the polyanionic compound.

Thus, the preparation method of this application can affect the crystal nucleation and growth rate of the polyanionic compound, affecting the chemical composition and crystal structure of the transition metal source, ultimately affecting the chemical composition and crystal structure of the anionic compound, and thus affecting the electrochemical performance thereof during use.

In some embodiments, the sodium source is a sodium salt, and optionally, sodium hydroxide. In some embodiments, the sodium source can be one or more of sodium carbonate, sodium hydroxide, or sodium nitrate.

In some embodiments, the manganese source is selected from manganese-containing oxides, manganese-containing salts, or a combination thereof.

In some embodiments, the silicon source is silicon dioxide or a silicon-containing salt.

In some embodiments, the M source is selected from oxides or salts containing element M, where the element M is selected from Ni, Fe, Cu, Zn, Mg, Al, or a combination thereof.

In some embodiments, the M' source is selected from oxides or salts containing element M', where the element M' is selected from Ge, Sn, Ti, or a combination thereof.

In some embodiments, the X source is a salt containing element X, where X is selected from F, Cl, S, Se, N, or a combination thereof.

In some embodiments, the solvent is selected from methanol, ethanol, propanol, propylene glycol, butanol, water, or a combination thereof, and optionally, deionized water.

There are no special restrictions on the detergent used for the washing and the number of washes. The choice can be made depending on actual needs, as long as the remaining ions on the surface of the product are removed.

The raw materials of the polyanionic compound, for example, the manganese source, the silicon source, the M source, the M' source, and the X source, have simple components, low cost, and good processing performance.

Thus, in the preparation method of this application, different reactants, different solvents, the same reactant in different solvents having different dissociation strengths, and different predetermined temperatures affecting the reaction rate, including the crystal nucleation and growth rate of the polyanionic compound, affect the chemical composition and crystal structure of the transition metal source, ultimately affecting the chemical composition and crystal structure of the anionic compound, and thus affecting the electrochemical performance thereof during use.

In some embodiments, the reacting and crystallizing the sodium source, the manganese source, the silicon source, the M source, the M' source, and the X source in the dispersion under a predetermined temperature condition to obtain a suspension containing crystalline particles includes:
reacting and crystallizing the sodium source, the manganese source, the silicon source, the M source, the M' source, and the X source in the dispersion at a predetermined temperature of 160°C to 240°C in a closed environment to obtain the suspension containing the crystalline particles. Optionally, the dispersion is held at 160°C to 240°C in a closed environment for 8 h to 48 h.

Additionally, the predetermined temperature of the reaction system directly affects the rate and yield of the chemical reaction, and the reaction time affects the growth process of the reaction product, thereby affecting the chemical composition and structure of the reaction product. Optionally, the predetermined temperature can be 170°C, 180°C, 190°C, 200°C, 210°C, 220°C, 230°C, or 240°C. The reaction time can be 10 hours or 40 hours. The predetermined temperature and time affect the specific surface area, particle size, morphology, and crystal structure of the reaction product.

Thus, the preparation method of this application comprehensively regulates the reaction conditions of the reactants, including the predetermined temperature and closed environment of the reaction, so that the polyanionic compound has the specific chemical composition and structure described in this application. This can significantly improve the electrochemical performance of the positive electrode active material, ultimately increasing the specific capacity, rate performance, and cycling performance of the sodium-ion battery.

### Positive electrode material

A third aspect of this application provides a positive electrode material including the polyanionic compound according to the first aspect of this application or the polyanionic compound prepared by using the method according to the second aspect of this application. Thus, a novel polyanionic compound with excellent performance is provided as a positive electrode material for sodium-ion battery.

A theoretical specific capacity of the positive electrode material for sodium-ion battery is high, with a specific capacity being >200 mAh/g.

### Positive electrode sheet

A fourth aspect of this application provides a positive electrode sheet including:
a positive electrode current collector; and
a positive electrode material layer disposed on at least one side of a positive electrode current collector, where the positive electrode material layer includes the positive electrode material according to the third aspect of this application. Thus, the positive electrode sheet of this application has high comprehensive electrochemical performance.

In an example, the positive electrode current collector has two opposite surfaces in a thickness direction thereof, and the positive electrode material layer is disposed on either or both of the two opposite surfaces of the positive electrode current collector.

In some embodiments, the positive electrode current collector may be a metal foil current collector or a composite current collector. For example, an aluminum foil may be used as the metal foil. The composite current collector may include a polymer material substrate and a metal layer formed on at least one surface of the polymer material substrate. The composite current collector may be formed by forming a metal material (aluminum, aluminum alloy, copper, nickel, nickel alloy, titanium, titanium alloy, silver, silver alloy, or the like) on a polymer material matrix (for example, a matrix of polypropylene (PP), polyethylene terephthalate (PET), polybutylene terephthalate (PBT), polystyrene (PS), or polyethylene (PE)).

In some embodiments, the thickness of the positive electrode current collector is 4 µm to 20 µm, optionally, 6 µm to 18 µm, and further optionally, 8 µm to 16 µm.

In some embodiments, based on a total weight of the positive electrode material layer, a mass percentage of the positive electrode material contained in the positive electrode material layer is 80% to 98%. Thus, the energy density is further improved.

A fifth aspect of this application provides a secondary battery including the positive electrode sheet in the fourth aspect of this application. Thus, the secondary battery of this application has high comprehensive electrochemical performance.

Optionally, the positive electrode sheet has a high specific capacity and better cycling stability in button cells.

A sixth aspect of this application provides an electronic device including the secondary battery according to the fifth aspect of this application.

In addition, the following describes the secondary battery and the electronic device in this application with appropriate reference to the accompanying drawings.

### Secondary battery

An embodiment of this application provides a secondary battery.

Normally, the secondary battery includes a positive electrode sheet, a negative electrode plate, an electrolyte, and a separator. In a charge and discharge process of the battery, active ions intercalate and deintercalate between the positive electrode sheet and the negative electrode plate. The electrolyte conducts ions between the positive electrode sheet and the negative electrode plate. The separator is disposed between the positive electrode sheet and the negative electrode plate to mainly prevent a short circuit between positive and negative electrodes and to allow the ions to pass through.

### Positive electrode sheet

The positive electrode sheet includes a positive electrode current collector and a positive electrode material layer disposed on at least one surface of the positive electrode current collector, where the positive electrode material layer includes the positive electrode material according to the first aspect of this application.

As the above positive electrode sheet, the positive electrode material can further include one or more of sodium transition metal oxide, polyanionic compound, and Prussian blue compound. In the sodium-ion battery of some embodiments of this application, a negative electrode plate using hard carbon as the negative electrode active material can be used, paired with a positive electrode sheet including one or more positive electrode active materials selected from sodium transition metal oxide, polyanionic compound, and Prussian blue compound, to make the sodium-ion battery have high capacity performance and energy density.

For example, an example of the sodium transition metal oxide can be listed as:
Na₁₋ₓCu*ₕ*Fe*ₖ*Mn*ₗ*M¹M¹*ₘ*O_{2-y}, where M¹ is one or more of Li, Be, B, Mg, Al, K, Ca, Ti, Co, Ni, Zn, Ga, Sr, Y, Nb, Mo, In, Sn, and Ba, 0<x≤0.33, 0<h≤0.24, 0≤k≤0.32, 0<1≤0.68, 0≤m<0.1, h+k+1+m=1, and 0≤y<0.2;
Na_{0.67}Mn_{0.7}Ni*_{z}*M²_{0.3-*z*}O₂, where M² is one or more of Li, Mg, Al, Ca, Ti, Fe, Cu, Zn and Ba, and 0<z≤0.1; and
Na*ₐ*Li*_{b}*Ni*_{c}*Mn*_{d}*Fe*ₑ*O₂, where 0.67<a≤1, 0<b<0.2, 0<c<0.3, 0.67<d+e<0.8, and b+c+d+e=1.

For example, an example of the polyanionic compound can be listed as:
A¹*_{f}*M³_{g}(PO₄)*ᵢ*OⱼX¹₃₋ⱼ, where A is one or more of H, Li, Na, K and NH₄, M³ is one or more of Ti, Cr, Mn, Fe, Co, Ni, V, Cu and Zn, X¹ is one or more of F, Cl and Br, 0<f≤4, 0<g≤2, 1≤i≤3, and 0≤j≤2;
Na*ₙ*M⁴PO₄X², where M⁴ is one or more of Mn, Fe, Co, Ni, Cu and Zn, X² is one or more of F, Cl and Br, and 0<n≤2;
NaₚM⁵_{q}(SO₄)₃, where M⁵ is one or more of Mn, Fe, Co, Ni, Cu and Zn, 0<p≤2, and 0<q≤2;
Na*ₛ*Mn*ₜ*Fe_{3-*t*}(PO₄)₂(P₂O₇), where 0<s≤4, 0≤t≤3, and for example, t is 0, 1, 1.5, 2 or 3.

For example, an example of the Prussian blue-type compound can be listed as:
A*ᵤ*M⁶*ᵥ*[M⁷(CN)₆]*_{w}*·*x*H₂O, where A is one or more of H⁺, NH₄⁺, alkali metal cations, and alkaline earth metal cations, M⁶ and M⁷ are each independently one or more of transition metal cations, 0<u≤2, 0<v≤1, 0<w≤1, and 0<x<6. For example, A is one or more of H⁺, Li⁺, Na⁺, K⁺, NH₄⁺, Rb⁺, Cs⁺, Fr⁺, Be²⁺, Mg²⁺, Ca²⁺, Sr²⁺, Ba²⁺ and Ra²⁺, and M⁶ and M⁷ are each independently a cation of one or more transition metal elements selected from Ti, V, Cr, Mn, Fe, Co, Ni, Cu, Zn, Sn and W. Optionally, A is one or more of Li⁺, Na⁺, and K⁺, M⁶ is a cation of one or more transition metals of Mn, Fe, Co, Ni, and Cu, and M⁷ is a cation of one or more transition metals of Mn, Fe, Co, Ni, and Cu.

In some embodiments, the positive electrode material layer further optionally includes a binder. For example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, or fluorine-containing acrylic resin.

In some embodiments, the weight percentage of the conductive agent in the positive electrode material layer is greater than or equal to 0.5wt%. This is beneficial to constructing a better electronic conductive network.

In some embodiments, the weight percentage of the binder in the positive electrode material layer is greater than or equal to 0.5wt%. This is beneficial to obtaining good adhesion performance.

In some embodiments, the positive electrode material layer further optionally includes a conductive agent. For example, the conductive agent may include at least one of superconducting carbon, acetylene black, carbon black, Ketjen black, carbon dots, carbon nanotubes, graphene, or carbon nanofiber.

In some embodiments, the positive electrode sheet may be prepared in the following manner: the constituents used for preparing the positive electrode sheet, for example, the positive electrode material, the conductive agent, the binder, and any other constituent, are dispersed in a solvent (for example, N-methylpyrrolidone) to form a positive electrode slurry; and the positive electrode slurry is applied onto the positive electrode current collector, followed by processes such as drying and cold pressing to obtain the positive electrode sheet.

### Negative electrode plate

The negative electrode plate includes a negative electrode current collector and a negative electrode material layer disposed on at least one surface of the negative electrode current collector, and the negative electrode material layer includes a negative electrode active material.

In an example, the negative electrode current collector has two opposite surfaces in a thickness direction thereof, and the negative electrode material layer is disposed on either or both of the two opposite surfaces of the negative electrode current collector. The negative electrode current collector may be made of a metal foil, a carbon-coated metal foil, or a porous metal plate, and optionally, a copper foil.

In an example, the negative electrode material layer includes a negative electrode active material, an optional conductive agent, and an optional binder. The conductive agent is used to improve the conductivity of the negative electrode material layer, and the binder is used to firmly bond the negative electrode active material and the binder to the negative electrode current collector. This application does not specifically limit the type of the conductive agent and binder, which can be selected depending on actual needs.

In an example, the negative electrode active material can be one or more of natural graphite, artificial graphite, mesocarbon microbeads (MCMB), hard carbon, and soft carbon.

For example, the conductive agent can be one or more of superconducting carbon, acetylene black, carbon black, Ketjen black, carbon dots, carbon nanotubes, graphene, and carbon nanofibers. The binder can be one or more of styrene-butadiene rubber (SBR), styrene-butadiene copolymer (SBCs), water-based acrylic resin (water-based acrylic resin), and carboxymethyl cellulose (CMC).

Further, the negative electrode material layer optionally includes a thickener, such as carboxymethyl cellulose (CMC). However, this application is not limited to thereto, and other materials that can be used as thickeners for negative electrode plates of sodium-ion batteries can also be used in this application.

### Electrolyte

The electrolyte conducts ions between the positive electrode sheet and the negative electrode plate. The electrolyte is not specifically limited to any particular type in this application, and may be selected depending on needs. For example, the electrolyte may be in a liquid state, a gel state, or an all-solid state.

In some embodiments, the electrolyte is a liquid electrolyte. The liquid electrolyte includes an electrolytic salt and a solvent.

In some embodiments, the electrolyte can include an organic solvent and a sodium salt, and any organic solvent and sodium salt that can be used for sodium-ion batteries can be selected depending on actual needs. In an example, the organic solvent can be one or more of ethylene carbonate (EC), propylene carbonate (PC), ethyl methyl carbonate (EMC), and diethyl carbonate (DEC); and the sodium salt can be one or more of NaPF₆, NaClO₄, NaBCl₄, NaSO₃CF₃, and Na(CH₃)C₆H₄SO₃.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methanesulfonate, or diethyl sulfone.

In some embodiments, the electrolyte further optionally includes an additive. For example, the additive may include a negative electrode film-forming additive and a positive electrode film-forming additive, or may include an additive that can improve some performance of the battery, for example, an additive for improving over-charge performance of the battery and an additive for improving high-temperature performance or low-temperature performance of the battery.

### Separator

As for the separator, this application has no special limitations, and any well-known porous separator with electrochemical stability and mechanical stability can be selected depending on actual needs.

In some embodiments, the secondary battery may further include a separator. The separator is not limited to any particular type in this application, and may be any well-known porous separator with good chemical stability and mechanical stability.

In some embodiments, a material of the separator may be at least one selected from glass fiber, non-woven fabric, polyethylene, polypropylene, or polyvinylidene fluoride. The separator may be a single-layer film or a multi-layer composite film, and is not particularly limited. When the separator is a multi-layer composite film, all layers may be made of same or different materials, which is not particularly limited.

In some embodiments, a positive electrode sheet, a negative electrode plate, and a separator may be made into an electrode assembly through winding or lamination.

In some embodiments, the secondary battery may include an outer package. The outer package is used for packaging the electrode assembly and the electrolyte.

In some embodiments, the outer package of the secondary battery may be a hard shell, for example, a hard plastic shell, an aluminum shell, or a steel shell. The outer package of the secondary battery may alternatively be a soft pack, for example, a soft pouch. A material of the soft pack may be plastic. As the plastic, polypropylene, polybutylene terephthalate, polybutylene succinate, and the like may be listed.

This application does not impose any special limitations on a shape of the secondary battery, and the secondary battery may be cylindrical, rectangular, or of any other shapes. For example, FIG. 6 shows a secondary battery 5 of a rectangular structure as an example.

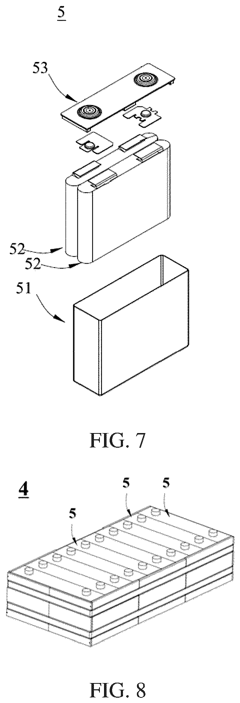

In some embodiments, referring to FIG. 7, the outer package may include a housing 51 and a cover plate 53. The housing 51 may include a base plate and side plates connected onto the base plate, and the base plate and the side plates enclose an accommodating cavity. The housing 51 has an opening communicating with the accommodating cavity, and the cover plate 53 can cover the opening to close the accommodating cavity. The positive electrode sheet, the negative electrode plate, and the separator may be made into an electrode assembly 52 through winding or lamination. The electrode assembly 52 is packaged in the accommodating cavity. The electrolyte infiltrates the electrode assembly 52. There may be one or more electrode assemblies 52 in the secondary battery 5, and persons skilled in the art may make choices according to actual requirements.

In some embodiments, the secondary battery may be assembled into a battery module, and the battery module may include one or more secondary batteries. The specific quantity may be chosen by persons skilled in the art according to use and capacity of the battery module.

FIG. 8 shows a battery module 4 as an example. Refer to FIG. 8. In the battery module 4, a plurality of secondary batteries 5 may be sequentially arranged in a length direction of the battery module 4. Certainly, the batteries may alternatively be arranged in any other manners. Further, the plurality of secondary batteries 5 may be fastened by using fasteners.

Optionally, the battery module 4 may further include a housing with an accommodating space, and the plurality of secondary batteries 5 are accommodated in the accommodating space.

In some embodiments, the battery module may be further assembled into a battery pack, and the battery pack may include one or more battery modules. The specific quantity may be chosen by persons skilled in the art according to use and capacity of the battery pack.

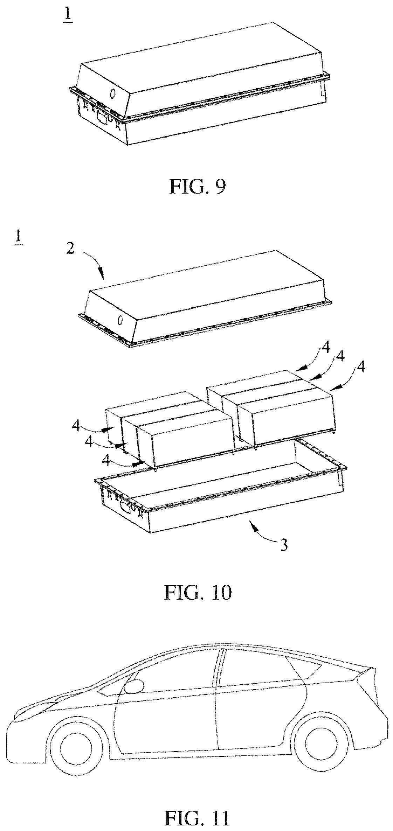

FIG. 9 and FIG. 10 show a battery pack 1 as an example. Refer to FIG. 9 and FIG. 10. The battery pack 1 may include a battery box and a plurality of battery modules 4 arranged in the battery box. The battery box includes an upper box body 2 and a lower box body 3. The upper box body 2 can cover the lower box body 3 to form an enclosed space for accommodating the battery module 4. The plurality of battery modules 4 may be arranged in the battery box in any manner.

In addition, this application further provides an electronic device. The electronic device includes at least one of the secondary battery, the battery module, or the battery pack provided in this application. The secondary battery, the battery module, or the battery pack may be used as a power source of the electronic device or as an energy storage unit of the electronic device. The electronic device may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, or the like, but is not limited thereto.

As the electronic device, a secondary battery, a battery module, or a battery pack may be selected according to requirements for using the device.

FIG. 11 shows an electronic device as an example. The electronic device is a battery electric vehicle, a hybrid electric vehicle, a plug-in hybrid electric vehicle, or the like. To meet requirements of the electronic device for high power and high energy density of secondary batteries, a battery pack or a battery module may be used.

In another example, the apparatus may be a mobile phone, a tablet computer, a notebook computer, or the like. Such apparatus is generally required to be light and thin and may use a secondary battery as its power source.

### Examples

The following describes examples of this application. The examples described below are illustrative and only used for explaining this application, and cannot be construed as limitations on this application. Examples whose technical solutions or conditions are not specified are made in accordance with technical solutions or conditions described in literature in the field or made in accordance with product instructions. The reagents or instruments used are all conventional products that are commercially available if no manufacturer is indicated.

### Example 1

Preparation of positive electrode material: (1) NaOH, MnO, SiO₂, and H₂O were mixed and dispersed to uniformity at a molar ratio of 2:1:2:25 to form a dispersion; (2) the dispersion was placed in a high-pressure reactor, heated to 160°C in 2 h, held for 48 hours, and naturally cooled to obtain a suspension; and (3) the suspension was washed 5 times with a large amount of deionized water, followed by drying to obtain a positive electrode material, which was recorded as A.

X-ray diffraction test: An X-ray diffractometer (XPertPro MPD from Panalytical of Netherlands) was used and test conditions were set: Cu Kα radiation (λ=1.5418Å), working current: 250 mA, continuous scanning, working voltage: 40 kV, scanning range 2θ: 10° to 70°, step size: 0.1°, and scanning speed: 0.2 seconds/step.

X-ray diffraction was performed to test the positive electrode material A, and the crystal structure of the polyanionic compound was analyzed by using the refinement method (Rietveld) of powder XRD. The polyanionic compound has a unit cell parameter a meeting 7.5±1.5Å, a unit cell parameter b meeting 10.5±1.5Å, and a unit cell parameter c meeting 10.5±1.5Å. One unit cell of the crystal structure of the polyanionic compound contained 12 Na atoms, 6 Mn atoms, 12 Si silicon atoms, and 36 oxygen atoms.

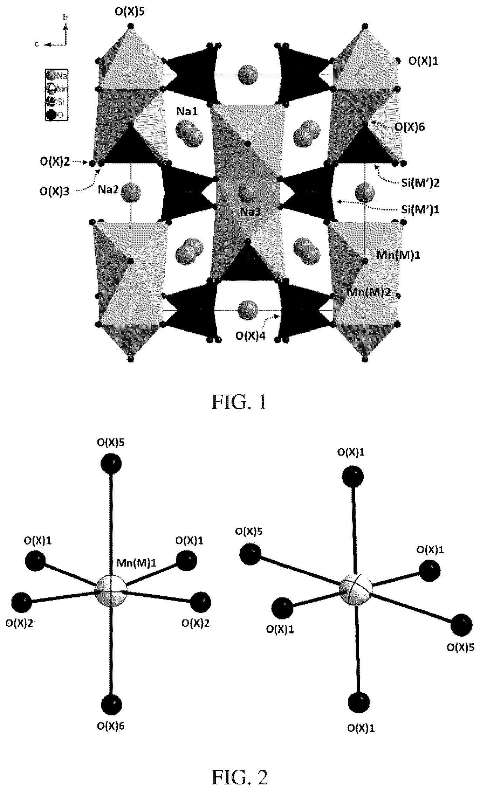

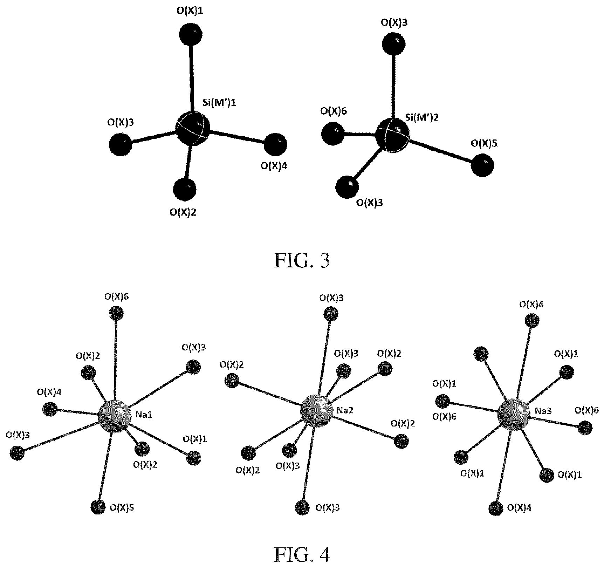

Each Si atom formed a silicon-oxygen tetrahedron with four oxygen atoms at vertices, and every two silicon-oxygen tetrahedrons were corner-linked by sharing one oxygen atom. Each Mn atom forms a manganese-oxygen octahedron with six oxygen atoms at vertices, and every two manganese-oxygen octahedrons were coplanar connected by sharing three oxygen atoms. The silicon-oxygen tetrahedron and the manganese-oxygen octahedron were corner-linked by sharing an oxygen atom. The silicon-oxygen tetrahedrons and the manganese-oxygen octahedrons were corner-bridged into an anionic network by sharing an oxygen atom or X atom; and Na⁺ was arranged along an axis a of the crystal structure of the polyanionic compound and filled pores of the crystal structure. Specifically, in the positive electrode material A, valencies of Na, Mn, Si, and O were +1, +2, +4, and -2, respectively. Mn1 and Mn2 both formed a [MnO₆] octahedron, and the two octahedrons were coplanar connected by sharing two O1 and one O5 (as shown in FIG. 2, the left and right diagrams show the atomic positions in the crystal from different angles). The Mn-O bond lengths were distributed in the range of 2.1719-2.4253Å. Crystallographically independent Si1 and Si2 both formed a [SiO₄] tetrahedron, and the two tetrahedrons were corner-linked by sharing O3 (as shown in FIG. 3, the left and right diagrams show the atomic positions in the crystal from different angles) to form an octahedron and a tetrahedron that were connected. The Si-O bond lengths were distributed in the range of 1.6199-1.6533Å. All [MnO₆] octahedrons and [SiO₄] tetrahedrons were corner-bridged into an anionic network by sharing four endpoints of O1, O2, O5, and O6. Three independent Nas filled the pores and formed a [NaO₈] eight-coordinate structure with surrounding O (as shown in FIG. 4, the left, middle, and right diagrams show the atomic positions in the crystal from different angles). The Na-O bond lengths were distributed in the range of 2.2109-2.8471Å. The chemical formula of the positive electrode material A can be obtained as Na₂MnSi₂O₆. FIG. 5 is an XRD spectrum of the Na₂MnSi₂O₆ material in Example 1.

Crystallography software Diamond was used to obtain atomic position states, as shown in the table below.

| Atom type | Atom classification | Number | Position parameter | | |
|---|---|---|---|---|---|
| Na | Na0 | 8 | 0.01973200 | 0.76623500 | 0.23486100 |
| Na | Na1 | 2 | 0.00000000 | 0.00000000 | 0.50000000 |
| Na | Na2 | 2 | 0.00000000 | 0.50000000 | 0.50000000 |
| Mn | Mn3 | 4 | 0.23275600 | 0.26293200 | 0.50000000 |
| Mn | Mn4 | 2 | 0.00000000 | 0.00000000 | 0.00000000 |
| Si | Si5 | 8 | 0.21742700 | 0.49295300 | 0.22764500 |
| Si | Si6 | 4 | 0.24798600 | 0.27958400 | 0.00000000 |
| O | O7 | 8 | 0.20268100 | 0.94081900 | 0.13733800 |
| O | O8 | 8 | 0.21282600 | 0.12541600 | 0.33737800 |
| O | O9 | 8 | 0.24405100 | 0.87407700 | 0.37295100 |
| O | O10 | 4 | 0.00000000 | 0.50000000 | 0.25082600 |
| O | O11 | 4 | 0.05532000 | 0.20819300 | 0.00000000 |
| O | O12 | 4 | 0.05986500 | 0.70694500 | 0.50000000 |

Preparation of positive electrode sheet: The positive electrode material Na₂MnSi₂O₆, a binder PVDF, and a conductive agent conductive carbon black were mixed at a weight ratio of 90:5:5, and a solvent NMP was added, ensuring a solid content of 40%. The foregoing substances were stirred under vacuum to a uniform transparent system, to obtain a positive electrode slurry. The positive electrode slurry was uniformly applied on a positive electrode current collector aluminum foil. Then the foil was transferred to an oven for drying at a drying temperature of 120°C, followed by cold pressing and cutting to obtain a positive electrode sheet.

Preparation of electrolyte: Ethylene carbonate (EC), ethyl methyl carbonate (EMC) and diethyl carbonate (DEC) were uniformly mixed at a volume ratio of 1:1:1 to obtain an organic solvent. 1 mol/L NaPF₆ was dissolved in the organic solvent. Based on a total mass of the electrolyte, 5% fluoroethylene carbonate (FEC) was added, and the substances were mixed to uniformity to obtain an electrolyte.

Preparation of sodium-ion secondary button cell: The positive electrode sheet, a separator, and a sodium metal sheet were stacked in sequence. The separator was a 14 µm thick polypropylene (PP) film (provided by Celgard), which separated the positive electrode sheet from the negative sodium metal sheet. The electrolyte was injected and sealing was performed. Standing was performed for 6 h to obtain a sodium-ion secondary button cell.

### Examples 2 to 8

The difference from Example 1 is that the composition and preparation parameters of the positive electrode material were adjusted. For details, see the table below.

**Table 1 Composition and preparation parameters of positive electrode materials in Examples 2 to 8**

| Type | Positive electrode material composition | Na source | Mn source | Si source | M source | M' source | X source | Reaction time (°C) | Reaction time (h) |
|---|---|---|---|---|---|---|---|---|---|
| Example 2 | Na₂Mn_{0.95}Ni_{0.05}Si₂O₆ | NaOH | MnCl₂ | SiO₂ | NiO | / | / | 240 | 8 |
| Example 3 | Na₂Mn_{0.92}Ni_{0.02}Fe_{0.02}Cu_{0.02}Mg_{0.02}Si₂O₆ | NaCl | MnO | Na₄SiO₄ | NiO, FeO CuO, MgO | / | / | 200 | 10 |
| Example 4 | Na_{1.99}Mn_{0.97}Zn_{0.02}Al_{0.01}Si₂O₆ | NaOH | MnO | SiO₂ | ZnCl₂ NaAlO₂ | / | / | 180 | 36 |
| Example 5 | Na₂MnSi_{1.95}Ti_{0.05}O₆ | NaOH | MnO | SiO₂ | / | Na₂TiO₃ | / | 220 | 12 |
| Example 6 | Na₂MnSi_{1.95}Ge_{0.02}3Sn_{0.03}O₆ | NaOH | MnO | SiO₂ | / | GeO₂ SnO₂ | / | 160 | 48 |
| Example 7 | Na₂MnSi₂O_{5.9}F_{0.1}Cl_{0.1} | NaOH | MnO | SiO₂ | / | / | NaF | 160 | 24 |
| | | | | | | | Na₃OCl | | |
| Example 8 | Na₂MnSi₂O_{5.5}S_{0.1}Se_{0.1}N_{0.2} | NaOH | MnO | SiO₂ | / | / | Na₂S | 190 | 20 |
| | | | | | | | Na₂Se | | |
| | | | | | | | NaCN | | |

### Comparative Examples 1 to 3

The difference from Example 1 is that related parameters in the preparation step of the positive electrode material were adjusted. For details, see the table below.

**Table 2 Related parameters in preparation steps of positive electrode materials in Comparative Examples 1 to 3**

| Type | Reaction temperature (°C) | Reaction time (h) |
|---|---|---|
| Comparative Example 1 | 140 | 48 |
| Comparative Example 2 | 260 | 12 |
| Comparative Example 3 | 180 | 4 |

### Performance test

### (1) X-ray diffraction test

An X-ray diffractometer (XPertPro MPD from Panalytical of Netherlands) was used and test conditions were set: Cu Kα radiation (λ=1.5418Å), working current: 250 mA, continuous scanning, working voltage: 40 kV, scanning range 2θ: 10° to 70°, step size: 0.1°, and scanning speed: 0.2 seconds/step.

In the crystal structure of the Na₂₊ₓMn_{1-y}M_{y}Si_{2-z}M'_{z}O₆₋ₜXₜ compounds prepared in Examples 1 to 8, there were no metal-metal bonds and anion-anion bonds, and the atoms all exhibited conventional valence states.

In the crystal structure of the Na₂₊ₓMn_{1-y}M_{y}Si_{2-z}M'_{z}O₆₋ₜXₜ compound, each Si atom formed a silicon-oxygen tetrahedron with four oxygen atoms at vertices, and every two silicon-oxygen tetrahedrons were corner-linked by sharing one oxygen atom. Each Mn atom forms a manganese-oxygen octahedron with six oxygen atoms at vertices, and every two manganese-oxygen octahedrons were coplanar connected by sharing three oxygen atoms. The silicon-oxygen tetrahedron and the manganese-oxygen octahedron were corner-linked by sharing an oxygen atom. The silicon-oxygen tetrahedrons and the manganese-oxygen octahedrons were corner-bridged into an anionic network by sharing an oxygen atom or X atom; and Na⁺ was arranged along an axis a of the crystal structure of the polyanionic compound and filled pores of the crystal structure. The two crystallographically independent Mn(M)s were both six-coordinated, forming an octahedral structure with O(X), and the two independent Si(M')s were both four-coordinated, forming a tetrahedral structure with O(X). The three independent Nas filled pores and formed an eight-coordination structure with O(X), as shown in FIG. 1.

In an XRD spectrum of the Na₂₊ₓMn_{1-y}M_{y}Si_{2-z}M'_{z}O₆₋ₜXₜ material, the strongest diffraction peak corresponding to the (222) crystal plane appeared at 33° to 35°.

In the Na₂MnSi₂O₆ polyanionic compound in Example 1, two molecules of Na⁺ can be reversibly intercalated and deintercalated, and with the valence state of the transition metal changing from Mn²⁺ to Mn⁴⁺, a corresponding specific capacity was about 212 mAh/g. The elements in the polyanionic compound included only inexpensive transition metals and non-metal elements, such as Mn and Si, having extremely low cost, and therefore had a particularly obvious cost advantage in large-scale commercial application.

### (2) Specific capacity and cycling performance test for secondary battery at 25°C

The positive electrode materials obtained in Examples 1 to 8 and Comparative Examples 1 to 3 were separately manufactured into button cells, for performance testing. The test results are shown in table 2 below.

The test method was as follows: At 25°C, the sodium-ion secondary button cell was charged at a constant rate of 0.1C to 4.2 V, then charged at a constant voltage until the current was less than or equal to 0.025C, and then discharged at a constant rate of 0.1C to 1.5 V. This was one charge-discharge cycle. After one cycle of activation, the discharge specific capacity of the second cycle was recorded as the specific capacity of the positive electrode material. The charge and discharge of the sodium-ion secondary button cell was repeated in the above method for 50 times, the discharge specific capacity of the last cycle was recorded, and the cycling capacity retention rate was calculated according to the following formula.

Capacity retention rate after 50 cycles=discharge specific capacity of the last cycle/discharge specific capacity of the first cycle x 100%

**Table 3 Related parameters of positive electrode materials for sodium-ion secondary battery in comparative examples and examples**

| Type | Positive electrode active material | Specific capacity (mAh/g) | Capacity retention rate after 50 cycles (%) |
|---|---|---|---|
| Comparative Example 1 | Na₂MnSi₂O₆ | 83.5 | 46.5 |
| Comparative Example 2 | Na₂MnSi₂O₆ | 91.8 | 72.3 |
| Comparative Example 3 | Na₂MnSi₂O₆ | 98.5 | 76.5 |
| Example 1 | Na₂MnSi₂O₆ | 125.4 | 93.6 |
| Example 2 | Na₂Mn_{0.95}Ni_{0.05}Si₂O₆ | 127.2 | 94.2 |
| Example 3 | Na₂Mn_{0.92}Ni_{0.02}Fe_{0.02}Cu_{0.02}Mg_{0.02}Si₂O₆ | 129.1 | 93.8 |
| Example 4 | Na_{1.99}Mn_{0.97}Zn_{0.02}Al_{0.01}Si₂O₆ | 123.8 | 94.3 |
| Example 5 | Na₂MnSi_{1.95}Ti_{0.05}O₆ | 124.2 | 94.1 |
| Example 6 | Na₂MnSi_{1.95}Ge_{0.02}Sn_{0.03}O₆ | 123.9 | 95.2 |
| Example 7 | Na₂MnSi₂O_{5.9}F_{0.1}Cl_{0.1} | 125.8 | 93.1 |
| Example 8 | Na₂MnSi₂O_{5.5}S_{0.1}Se_{0.1}N_{0.2} | 126.6 | 93.5 |

It can be seen from the above results that in the positive electrode materials in the examples, the capacity retention rates after 50 cycles are over 90%, and the specific capacities are over 120 mAh/g, with all achieving good cycling capacity retention rate and specific capacity.

In contrast, in the positive electrode materials in the comparative examples, the capacity retention rates after 50 cycles are below 80%, and the specific capacities are below 100 mAh/g, having poorer cycling capacity retention and lower specific capacity.

It should be noted that this application is not limited to the foregoing embodiments. The foregoing embodiments are merely examples, and embodiments having substantially the same constructions and the same effects as the technical idea within the scope of the technical solutions of this application are all included in the technical scope of this application. In addition, without departing from the essence of this application, various modifications made to some embodiments that can be conceived by persons skilled in the art, and other manners constructed by combining some of the constituent elements in some embodiments are also included in the scope of this application.

## Claims

1. A polyanionic compound, having the following chemical formula:
Na₂₊ₓMn_{1-y}M_{y}Si_{2-z}M'_{z}O₆₋ₜNₖXₚY_{q} (1);
wherein in formula (1),
M is selected from Ni, Fe, Cu, Zn, Mg, Al, or a combination thereof, M' is selected from Ge, Sn, Ti, or a combination thereof, X is selected from S, Se, or a combination thereof, and Y is selected from F, Cl, or a combination thereof;
wherein -0.2<x<0.2, 0≤y<0.1, 0≤z<0.1, 0≤t≤0.5, 0≤k≤2t/3, 0≤p≤t, 0≤q≤t/2, and k+1/2p+3/2q=t.

2. The polyanionic compound according to claim 1, wherein, -0.1≤x≤0, 0≤y≤0.08, and 0≤z≤0.05.

3. The polyanionic compound according to claim 2, wherein the polyanionic compound has the following chemical formula: Na₂MnSi₂O₆.

4. The polyanionic compound according to any one of claims 1 to 3, wherein an X-ray powder diffraction pattern of the polyanionic compound has characteristic peaks at 2θ values of 34°±0.5°, 49°±0.5°, and 24°±0.5°.

5. The polyanionic compound according to any one of claims 1 to 3, wherein an X-ray powder diffraction pattern of the polyanionic compound has a strongest characteristic diffraction peak attributed to a (222) crystal plane at a 2θ value of 34°±0.5°.

6. The polyanionic compound according to claim 5, wherein the polyanionic compound has an orthorhombic crystal structure belonging to a Pnnm space group.

7. The polyanionic compound according to claim 6, wherein the polyanionic compound has a unit cell parameter a meeting 7.5±1.5Å, a unit cell parameter b meeting 10.5±1.5Å, and a unit cell parameter c meeting 10.5±1.5Å.

8. The polyanionic compound according to claim 6, wherein a unit cell of a crystal structure of the polyanionic compound comprises:
12 Na atoms, 6 Mn atoms, 12 Si silicon atoms, and 36 oxygen atoms; wherein
optionally, in the unit cell of the crystal structure of the polyanionic compound, the Mn atoms are at least partially substituted by an atom represented by M, the Si silicon atoms are at least partially substituted by an atom represented by M', and the oxygen atoms are at least partially substituted by an atom represented by X.

9. The polyanionic compound according to claim 8, wherein
each Si atom forms a silicon-oxygen tetrahedron with four oxygen atoms at vertices, and every two silicon-oxygen tetrahedrons are corner-linked by sharing one oxygen atom;
each Mn atom forms a manganese-oxygen octahedron with six oxygen atoms at vertices, and every two manganese-oxygen octahedrons are coplanar connected by sharing three oxygen atoms;
the silicon-oxygen tetrahedron and the manganese-oxygen octahedron are corner-linked by sharing an oxygen atom; and
optionally, the Mn atoms are at least partially substituted by an atom represented by M, the Si silicon atoms are at least partially substituted by an atom represented by M', and the oxygen atoms are at least partially substituted by an atom represented by X.

10. The polyanionic compound according to claim 9, wherein the silicon-oxygen tetrahedrons and the manganese-oxygen octahedrons are corner-bridged into an anionic network by sharing an oxygen atom or X atom; and
Na⁺ is arranged along an axis a of the crystal structure of the polyanionic compound and fills pores of the crystal structure.

11. The polyanionic compound according to any one of claims 1 to 3, wherein based on a total weight of the polyanionic compound, a mass percentage of element sodium contained in the polyanionic compound is 15% to 20%.

12. The polyanionic compound according to claim 1 or 2, wherein in a crystal structure of the polyanionic compound, a disorder rate of any two types of atoms among Na atom, Mn atom, Si atom, and O atom is <3%, and optionally <2%.

13. A preparation method of the polyanionic compound according to any one of claims 1 to 12, comprising:
providing a dispersion containing a sodium source, a manganese source, a silicon source, an M source, an M' source, and an X source at a predetermined molar ratio;
reacting and crystallizing the sodium source, the manganese source, the silicon source, the M source, the M' source, and the X source in the dispersion under a predetermined temperature condition to obtain a suspension containing crystalline particles; and
washing the suspension with a solvent, followed by drying, to obtain the polyanionic compound.

14. The preparation method according to claim 13, wherein the sodium source is a sodium salt, and optionally, sodium hydroxide;
the manganese source is selected from manganese-containing oxides, manganese-containing salts, or a combination thereof;
the silicon source is silicon dioxide or a silicon-containing salt;
the M source is selected from oxides or salts containing element M, wherein the element M is selected from Ni, Fe, Cu, Zn, Mg, Al, or a combination thereof;
the M' source is selected from oxides or salts containing element M', wherein the element M' is selected from Ge, Sn, Ti, or a combination thereof;
the X source is a salt containing element X, wherein X is selected from F, Cl, S, Se, N, or a combination thereof; and/or
the solvent is selected from methanol, ethanol, propanol, propylene glycol, butanol, water, or a combination thereof.

15. The preparation method according to claim 13, wherein the reacting and crystallizing the sodium source, the manganese source, the silicon source, the M source, the M' source, and the X source in the dispersion under a predetermined temperature condition to obtain a suspension containing crystalline particles comprises:
reacting and crystallizing the sodium source, the manganese source, the silicon source, the M source, the M' source, and the X source in the dispersion at a predetermined temperature of 160°C to 240°C in a closed environment to obtain the suspension containing the crystalline particles.

16. A positive electrode material, comprising the polyanionic compound according to any one of claims 1 to 12 or the polyanionic compound obtained by using the preparation method according to any one of claims 13 to 15.

17. A positive electrode sheet, comprising:
a positive electrode current collector; and
a positive electrode material layer disposed on at least one side of a positive electrode current collector, wherein the positive electrode material layer comprises the positive electrode material according to claim 15.

18. The positive electrode sheet according to claim 17, wherein based on a total weight of the positive electrode material layer, a mass percentage of the positive electrode material contained in the positive electrode material layer is 80% to 98%.

19. A secondary battery, comprising the positive electrode sheet according to claim 17 or 18.

20. An electronic device, comprising the secondary battery according to claim 19.
